# EUROPEAN PATENT APPLICATION

(11) **EP 3 605 346 A1**
(43) Date of publication of application: **05.02.2020**
(21) Application number: 18775870.1
(22) Date of filing: 29.03.2018
(51) Int. Cl.: G06F 13/10, G06F 9/455, G06F 13/14

(54) **CONTROL DEVICE, CONTROL SYSTEM, CONTROL METHOD AND PROGRAM**

(30) Priority: 30.03.2017 JP 2017069248
(71) Applicant: NEC Corporation, Tokyo 108-8001 (JP)
(72) Inventor: OOHIRA, Mayo, Tokyo 108-8001 (JP); KOSUGI, Masaaki, Tokyo 108-0073 (JP)
(74) Representative: Reeve, Nicholas Edward
(86) International application number: PCT/JP2018/013504
(87) International publication number: WO 2018/181840

(57) **Abstract**

The present invention contributes to an improvement in a speed of communication between a host machine and a guest machine. A control apparatus is configured by including one or more virtual machines each configured to control a virtual network function and a host machine to control the one or more virtual machines. The control apparatus is configured by including a virtual control module configured to control the one or more virtual machines, a physical control module configured to control the host machine, and a first storage module configured by including a first storage region and a second storage region and configured to be accessible by the virtual control module and the physical control module. The first storage region stores packet data, and the second storage region stores virtual addresses each configured to identify the first storage region. The control apparatus identifies the first storage region, based on one of the virtual addresses that are stored in the second storage region and reads the packet data from the identified first storage region.

## Description

### TECHNICAL FIELD

### (CROSS-REFERENCE TO RELATED APPLICATIONS)

The present invention is based upon and claims the benefit of the priority of Japanese Patent Application No. 2017-069248 (filed on March 30, 2017), the disclosure of which is incorporated herein in its entirety by reference.

The present invention relates to a control apparatus, a control system, a control method, and a program.

### BACKGROUND ART

Use of network function virtualisation (NFV; Network Function Virtualisation) for virtualising a function of a network apparatus (such as a router, a gateway, a firewall, or a load balancer) has spread. In the NFV, by executing the function of the network apparatus on a virtual machine, the virtual machine replaces the function of the network apparatus. Then, in recent years, an improvement of network performance has been demanded in the NFV.

Patent Literature 1 describes a technology by which, based on a computer resource amount for each computer node of a physical infrastructure and a network resource amount for each link, an accommodation relationship between one or more virtual machines and each computer node is searched, and the one or more virtual machines and one or more virtual communications are constructed on the physical infrastructure.

Patent Literature 2 describes a technology by which a virtual communication path for connecting an external process that can be operated on a host OS (Operating System) and a virtual machine is constructed on a guest OS that runs within the virtual machine.

Patent Literature 3 describes a technology by which a network function is deployed within one or more virtual containers, and a group identifier corresponding to a virtual network node is used to group the one or more virtual containers. In the technology described in Patent Literature 3, even when the network function has been distributed into plural virtual containers, for deployment, resource allocation for each virtual container is facilitated by grouping the virtual containers.

Non Patent Literature 1 discloses a configuration for realizing NFV in compliance with the ETSI (European Telecommunications Standards Institute) NFV standard.

In recent years, in order to improve network performance, to reduce a total cost of ownership (TCO; Total Cost of Ownership), or the like, offloading of a part of a process of a VNF (Virtual Network Function) in an NFVI (Network Function Virtualisation Infrastructure) by using an accelerator has been considered in ETSI NFV. To take an example, the offloading of the part of the process of the VNF in the NFVI by using the accelerator such as an FPGA (Field Programmable Gate Array), an ASIC (Application Specific Integrated Circuit), or an NPU (Network Processing Unit) has been considered.

Non Patent Literature 2 describes influence to be given to each functional component that comprises NFV and influence to be given to a reference point (reference point) between the respective functional components, by application of an accelerator in ETSI NFV.

Non Patent Literature 3 (in "5 Use Cases" in particular) describes an example of VNF use cases, in each of which a part of a process of a VNF in an NFVI is offloaded by using an accelerator in ETSI NFV.

### CITATION LIST

### PATENT LITERATURE

[PTL 1] JP Patent Kokai Publication No. JP-P-2015-162147A
[PTL 2] JP Patent Kokai Publication No. JP-P-2015-197874A
[PTL 3] JP Patent Kohyo Publication No. JP-P-2016-509412A

### NON PATENT LITERATURE

[NPL1] "Network Functions Virtualisation (NFV); Architechtual Framework", ETSI GS NFV 002 VI. 1. 1 (2013-10), [online], searched on February 16, 2017, Internet <URL: http://www.etsi.org/deliver/etsi_gs/nfv/001_099/002/01.01.01_60/gs_nfv002v 010101p.pdf >
[NPL2] "Network Functions Virtualisation (NFV); Acceleration Technologies; Management Aspects Specification", ETSI GS NFV-IFA 004 V2. 1. 1 (2016-04), [online], searched on February 16, 2017, Internet <URL:http://www.etsi.org/deliver/etsi_gs/NFV-IFA/001_099/004/02.01.01_60/gs_NFV-IFA004v020101p.pdf>
[NPL3] "Network Functions Virtualisation (NFV); Acceleration Technologies; Report on Acceleration Technologies & Use Cases", ETSI GS NFV-IFA 001 VI. 1. 1 (2015-12), [online], searched on February 16, 2017, Internet <URL:http://www.etsi.org/deliver/etsi_gs/NFV-IFA/001_099/001/01.01.01_60/gs_nfv-ifa001v010101p.pdf>

### SUMMARY OF INVENTION

### TECHNICAL PROBLEM

Each disclosure of the above-listed related art documents is incorporated herein by reference. The following analysis is given in terms of the present application.

As mentioned above, Non Patent Literature 2 describes the influence to be given to each functional component that comprises the NFV by the application of the accelerator. Non Patent Literature 3 describes the example of the VNF use cases, in each of which the part of the process of the VNF in the NFVI is offloaded by using the accelerator. Each of Non Patent Literatures 1 to 3, however, does not describe an improvement in a speed of communication between a host machine and a guest machine in the configuration where the accelerator has been applied.

In the technology described in each of Patent Literatures 1 to 3, a method of implementing an improvement in a speed of communication between a host machine and a guest machine in NFV by using an accelerator is not described.

Then, an object of the present invention is to provide a control apparatus, a control system, a control method, and a program that contribute to an improvement in a speed of communication between a host machine and a guest machine.

### SOLUTION TO PROBLEM

According to a first aspect, there is provided a control apparatus. The control apparatus is configured by including one or more virtual machines each configured to control a virtual network function and a host machine configured to control the one or more virtual machines.
The control apparatus comprises a virtual control module configured to control the one or more virtual machines.
The control apparatus further comprises a physical control module configured to control the host machine.
The control apparatus further comprises a first storage module configured to be accessible by the virtual control module and the physical control module. The first storage module is configured by including a first storage region and a second storage region.
Packet data is stored in the first storage region.
Virtual addresses each configured to identify the first storage region are stored in the second storage region.
The control apparatus identifies the first storage region based on one of the virtual addresses that are stored in the second storage region and reads the packet data from the identified first storage region.

According to a second aspect, there is provided a control system. The control system is configured by including a control apparatus configured by including one or more virtual machines each configured to control a virtual network function and a host machine configured to control the one or more virtual machines, and a management node configured to assign one of the one or more virtual machines.
The control apparatus includes a virtual control module to control the one or more virtual machines.
The control apparatus further includes a physical control module configured to control the host machine.
The control apparatus further includes a first storage module configured to be accessible by the virtual control module and the physical control module. The first storage module is configured by including a first storage region and a second storage region.
Packet data is stored in the first storage region.
Virtual addresses each configured to identify the first storage region are stored in the second storage region.
The control apparatus identifies the first storage region based on one of the virtual addresses that are stored in the second storage region and reads the packet data from the identified first storage region.

According to a third aspect, there is provided a control method. The control method is the control method of a control apparatus. The control apparatus is configured by including one or more virtual machines each configured to control a virtual network function and a host machine configured to control the one or more virtual machines. The control apparatus includes a virtual control module configured to control the one or more virtual machines, a physical control module configured to control the host machine, and a first storage module configured to be accessible by the virtual control module and the physical control module. The first storage module is configured by including a first storage region and a second storage region.
The control method comprises the step of storing packet data in the first storage region.
The control method comprises the step of storing, in the second storage region, virtual addresses each configured to identify the first storage region.
The control method comprises the step of identifying the first storage region based on one of the virtual addresses that are stored in the second storage region.
The control method comprises the step of reading the packet data from the identified first storage region.
This method is linked to a specific machine that is the control apparatus configured by including the one or more virtual machines each configured to control the virtual network function and the host machine configured to control the one or more virtual machine.

According to a fourth aspect, there is provided a program. The program is a program configured to be executed by a computer configured to control a control apparatus. The control apparatus is configured by including one or more virtual machines each configured to control a virtual network function and a host machine configured to control the one or more virtual machines. The control apparatus includes a virtual control module configured to control the one or more virtual machines, a physical control module configured to control the host machine, and a first storage module configured to be accessible by the virtual control module and the physical control module. The first storage module is configured by including a first storage region and a second storage region.
The program causes the computer to execute the process of storing packet data in the first storage region.
The program causes the computer to execute the process of storing, in the second storage region, virtual addresses each configured to identify the first storage region.
The program causes the program to execute the process of identifying the first storage region based on one of the virtual addresses that are stored in the second storage region.
The program causes the program to execute the process of reading the packet data from the identified first storage region.
This program can be recorded on a computer-readable storage medium. The storage medium can be set to a non-transient (non-transient) one such as a semiconductor memory, a hard disk, a magnetic recording medium, or an optical recording medium. The present invention can also be embodied as a computer program product.

### ADVANTAGEOUS EFFECTS OF INVENTION

According to each aspect, there are provided the control apparatus, the control system, the control method, and the program that contribute to an improvement in a speed of communication between the host machine and a guest machine.

### BRIEF DESCRIPTION OF DRAWINGS

[Fig. 1]

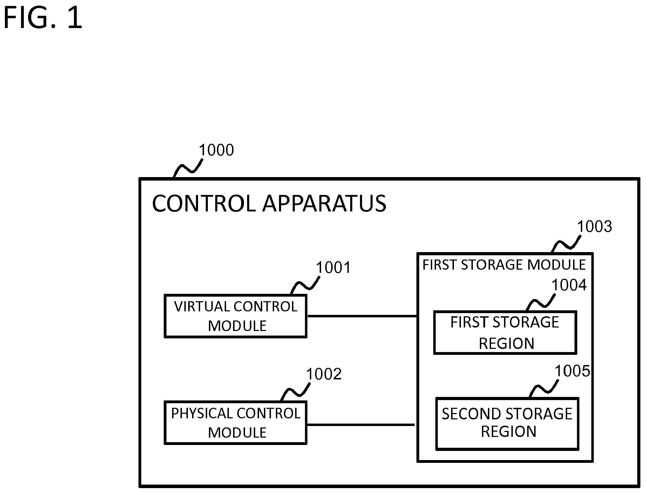

   Fig. 1 is a diagram for describing an overview of an exemplary embodiment.
[Fig. 2]

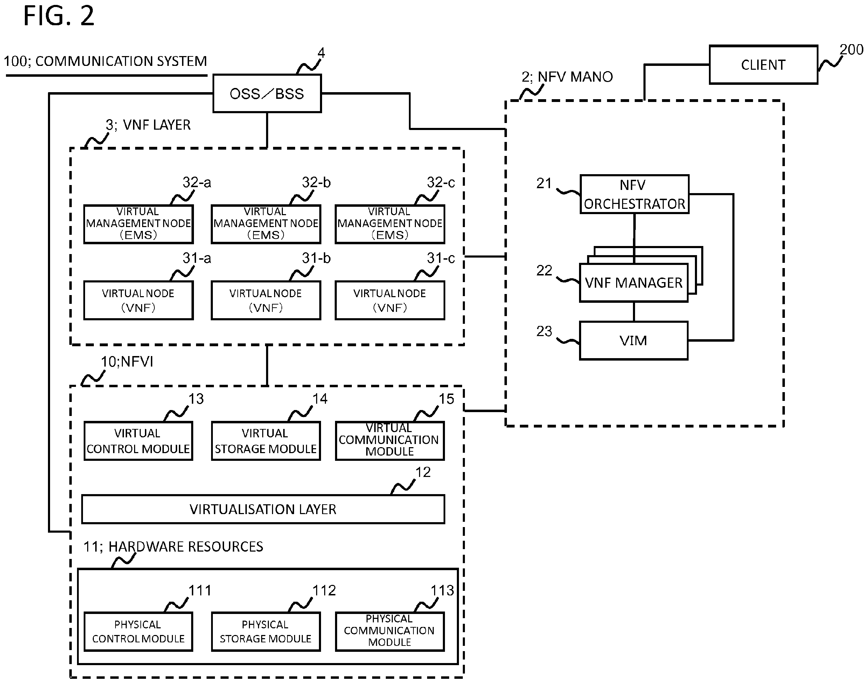

   Fig. 2 is a block diagram illustrating an example of an internal configuration of a communication system 100.
[Fig. 3]

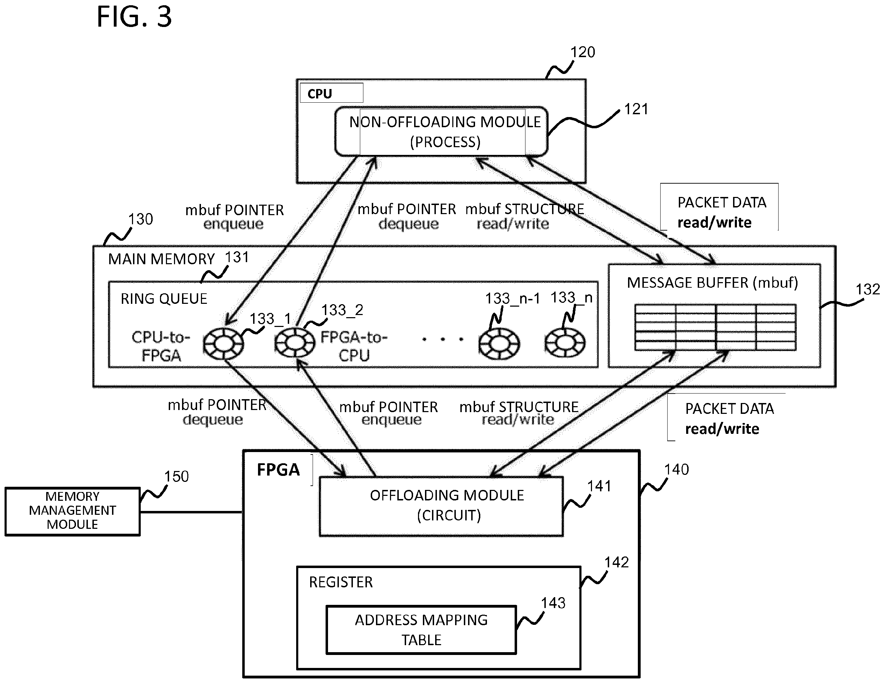

   Fig. 3 is a block diagram illustrating an example of an internal configuration of an NFVI 10.
[Fig. 4]

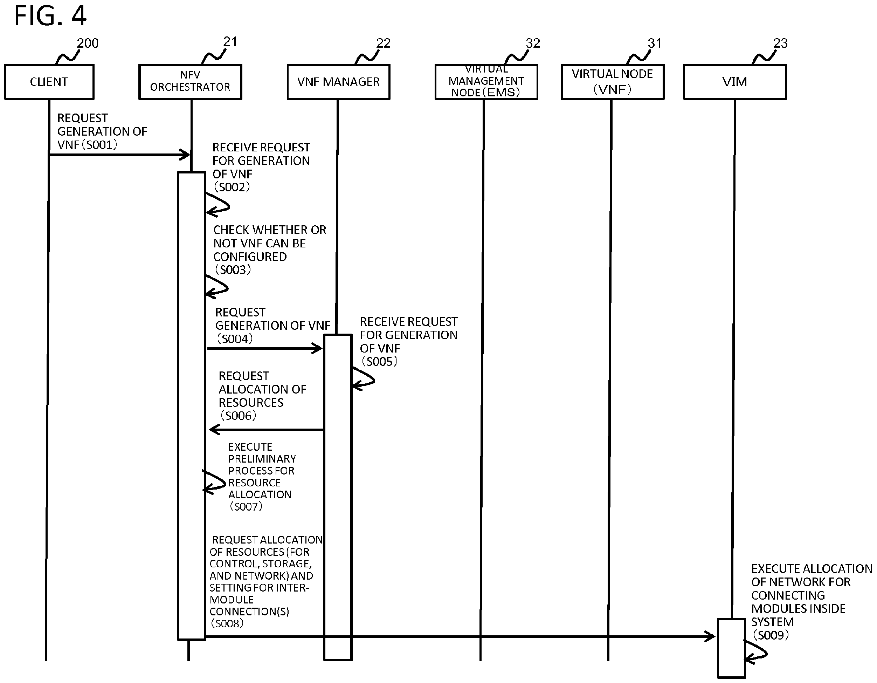

   Fig. 4 is a sequence diagram illustrating an example of operations of the communication system 100 according to a first exemplary embodiment.
[Fig. 5]

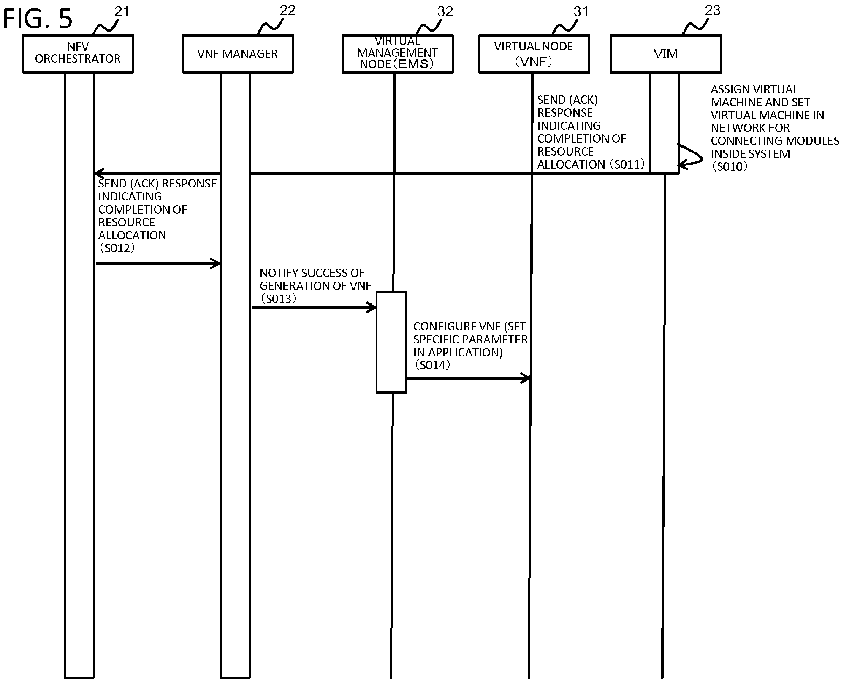

   Fig. 5 is a sequence diagram illustrating an example of operations of the communication system 100 according to the first exemplary embodiment.
[Fig. 6]

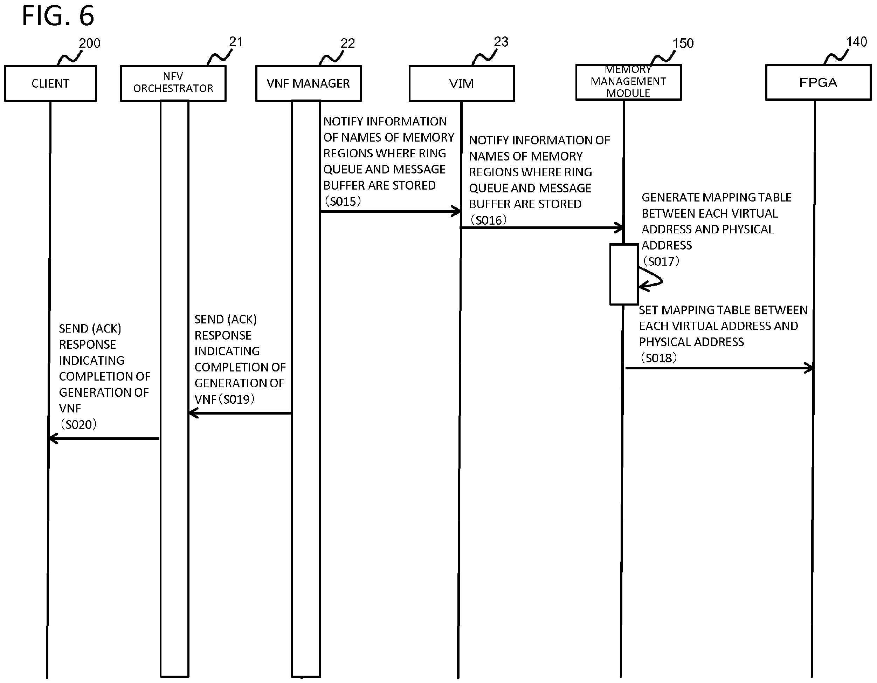

   Fig. 6 is a sequence diagram illustrating an example of operations of the communication system 100 according to the first exemplary embodiment.
[Fig. 7]

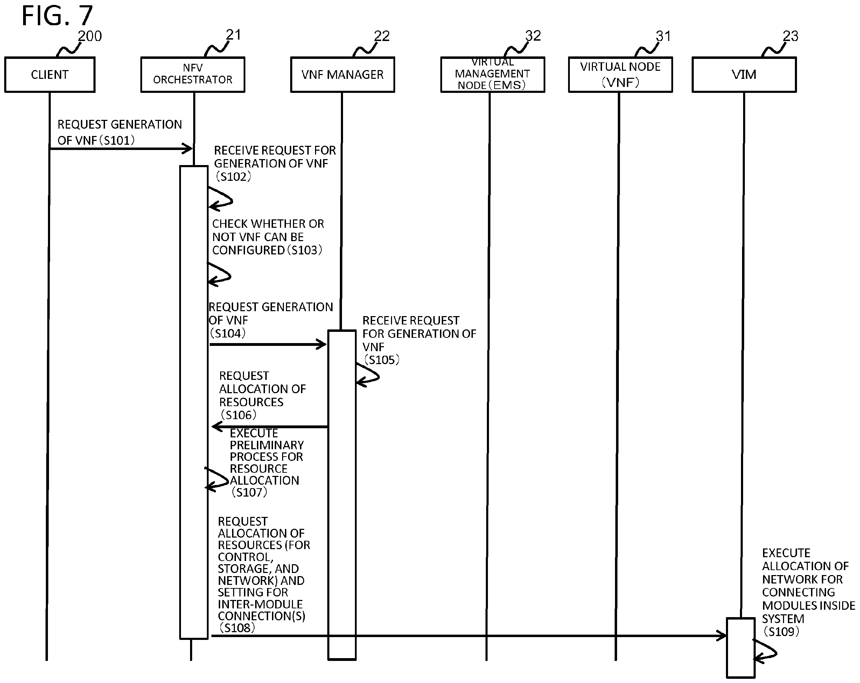

   Fig. 7 is a sequence diagram illustrating an example of operations of a communication system 100 according to a second exemplary embodiment.
[Fig. 8]

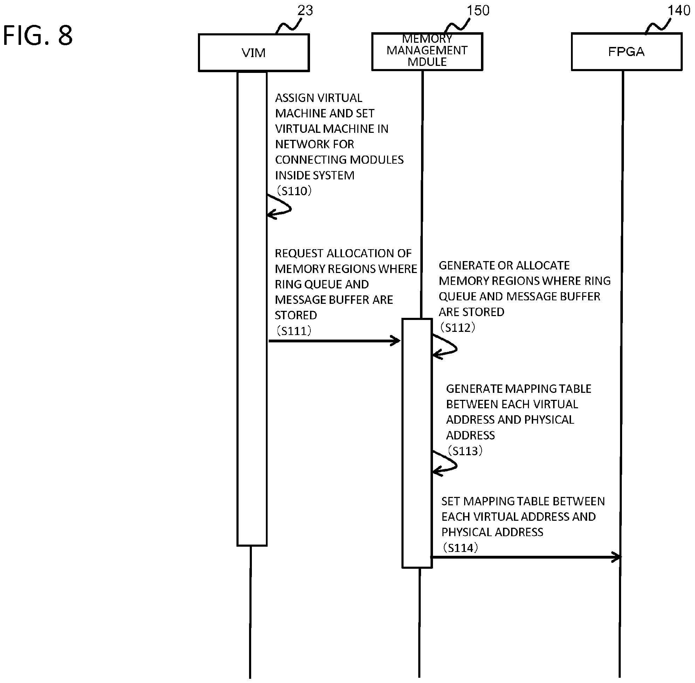

   Fig. 8 is a sequence diagram illustrating an example of operations of the communication system 100 according to the second exemplary embodiment.
[Fig. 9]

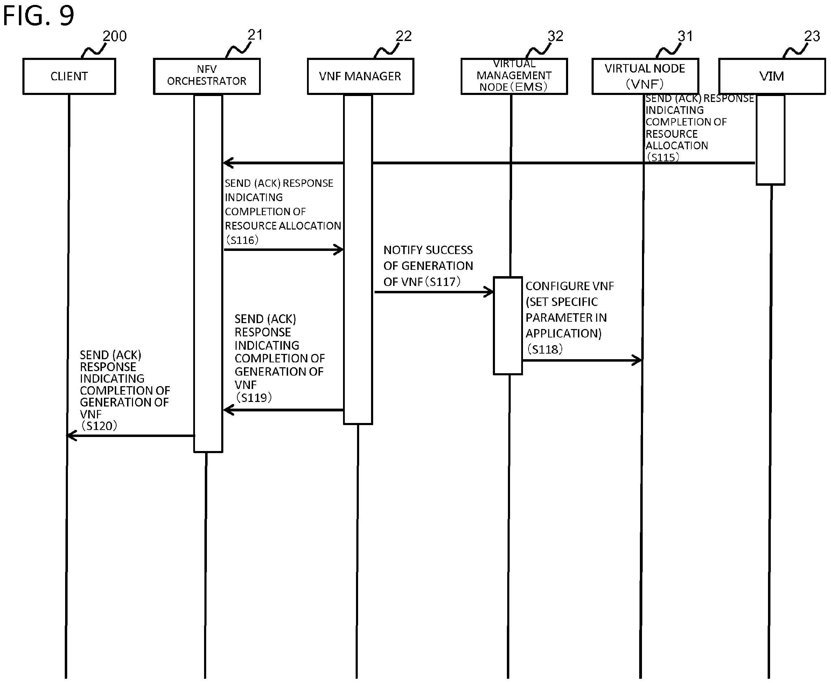

   Fig. 9 is a sequence diagram illustrating an example of operations of the communication system 100 according to the second exemplary embodiment.

### DESCRIPTION OF EMBODIMENTS

First, an overview of an exemplary embodiment will be described, using Fig. 1. A reference numeral in each drawing given in this overview is provided to each element as an example for helping understanding and the description of this overview does not intend any limitation. Connection lines between blocks in the respective drawings include both bidirectional connection lines and monodirectional connection lines. Each monodirectional arrow schematically illustrates a main signal (data) flow and does not exclude bidirectionality.

As described above, the control apparatus that contributes the improvement in the speed of the communication between the host machine and the guest machine is desired.

Then, a control apparatus 1000 illustrated in Fig. 1 is provided as an example. The control apparatus 1000 is configured by including one or more virtual machines each configured to control a virtual network function and a host machine configured to control the one or more virtual machines. Then, the control apparatus 1000 includes a virtual control module 1001, a physical control module 1002, and a first storage module 1003.

The virtual control module 1001 controls each virtual machine. The physical control module 1002 controls the host machine.

The first storage module 1003 is configured by including a first storage region 1004 and a second storage region 1005 and can be accessed by the virtual control module 1001 and the physical control module 1002. The first storage region 1004 stores packet data. The second storage region 1005 stores virtual addresses each configured to identify the first storage region 1004.

Based on one of the virtual addresses that is stored in the second storage region 1005, the control apparatus 1000 identifies the first storage region 1004 and reads the packet data from the identified first storage region 1004.

Herein, the control apparatus 1000 stores the packet data in a storage region (first storage region 1004) that can be accessed from both of the host machine and the guest machine. Therefore, the control apparatus 1000 does not need to copy the packet data from a transmission source to a transmission destination when the packet data is transmitted or received between the host machine and the guest machine. Accordingly, the control apparatus 1000 contributes to the improvement in the speed of the communication between the host machine and the guest machine.

### [First Exemplary embodiment]

A first exemplary embodiment will be described in detail, using the drawings.

Fig. 2 is a block diagram illustrating an example of an internal configuration of a communication system 100 according to this exemplary embodiment.

Referring to Fig. 2, the communication system 100 according to this exemplary embodiment is configured by including an NFV MANO (Network Function Virtualisation Management and Orchestration) 2, a VNF layer 3, and an NFVI 10. Each of the NFV MANO 2, the VNF layer 3, and the NFVI 10 communicates with an OSS/BSS 4. Fig. 2 illustrates an example of the communication system 100 according to this exemplary embodiment and does not intend to limit the communication system 100 according to this exemplary embodiment to the configuration illustrated in Fig. 2.

First, the NFV MANO 2 will be described in detail.

The NFV MANO 2 is configured by including an NFV orchestrator 21, one or more VNF managers 22 and a VIM (Virtualised Infrastructure Manager) 23.

The NFV orchestrator 21 receives, from a client 200, an instruction to generate a VNF or the like.

Each VNF manager 22 manages a VNF life cycle. The VNF manager 22 may be deployed in the NFV MANO 2 for each VNF. Alternatively, one VNF manager 22 may manage life cycles of two or more VNFs.

The VIM 23 executes a process of managing VNF resources.

### (VNF layer 3)

Subsequently, the VNF layer 3 will be described in detail.

The VNF layer 3 is configured by including virtual nodes (VNFs) (31-a to 31-c) and virtual management nodes (EMSs (Element Management Systems) (32-a to 32-c). In the following description, when there is no need for making a distinction among the virtual nodes (VNFs) (31-a to 31-c) and for making a distinction among the virtual management nodes (EMSs) (32-a to 32-c), each of the virtual nodes (VNFs) (31-a to 31-c) and each of the virtual management nodes (EMSs) (32-a to 32-c) will be written as a virtual node (VNF) 31 and a virtual management node (EMS) 32, respectively. Though Fig. 2 illustrates three virtual nodes (VNFs) (31-a to 31-c) and three virtual management nodes (EMSs) (32-a to 32-c), the drawing does not intend to limit the number of each of the virtual nodes (VNFs) 31 and the virtual management nodes (EMSs) 32 to three.

By setting (implementing) a network function in each virtual node (VNF) 31, the virtual node (VNF) 31 implements a VNF. A virtual machine uses the virtual node (VNF) 31 with the network function set therein to execute the network function set in the virtual node (VNF) 31. Naturally, one virtual node (VNF) 31 may correspond to two or more virtual machines. Further, naturally, one virtual machine may use two or more virtual nodes (VNFs) 31.

To take an example, application programs (hereinafter just referred to applications) based on the Intel (registered trademark) DPDK (Data Plane Development Kit) are targeted for the virtual nodes (VNFs) 31. The applications for the VNFs, for example, include "IP Sec tunnies Ttermination, Virual Base Station (VBS) L1, Trranscodin, NFVI Virtual Networking Offload, NFVI Secure Overlay Offload, and so on, which are described in Chapter 5 of Non Patent Literature 3. Further, the applications for the VNFs include a vCPE (virtualized Customer Promised Equipment), a vS-GW (virtualised Serving Gateway), a vP-GW (virtualized PDN (Packet Data Network) Gateway), and so on that are carrier network functions.

Each virtual management node (EMS) 32 manages one or more virtual nodes (VNFs) 31. Specifically, the virtual management node (EMS) 32 manages the network function set in each virtual node (VNF) 31. Each virtual management node (EMS) 32 may manage one virtual node (VNF) 31. Alternatively, one virtual management node (EMS) 32 may manage two or more virtual nodes (VNFs) 31.

### (NFV 110)

Subsequently, the NFVI 10 will be described in detail.

The NFVI 10 is configured by including a physical control module 111, a physical storage module 112, a physical communication part 113, a virtualisation layer 12, a virtual control module 13, a virtual storage module 14, and a virtual communication module 15.

The virtual machine is configured by including the virtual control module 13, the virtual storage module 14, and the virtual communication module 15. Herein, the NFVI 10 may be configured by including two or more virtual machines. In the following description, the virtual control module 13, the virtual storage module 14, and the virtual communication module 15 are also referred to just the "virtual machine" when no distinction does not need to be made among the virtual control module 13, the virtual storage module 14, and the virtual communication module 15. Further, in the following description, each virtual machine is also referred to as a guest machine.

The physical control module 111 controls an information processing apparatus (computer) that comprises the NFVI 10. The physical control module 111 according to this exemplary embodiment is configured by including an FPGA, for example.

The physical storage module 112 stores information necessary for operating the information processing apparatus that comprises the NFVI 10. The physical storage module 112 is implemented by using a magnetic disk apparatus, an optical disk apparatus, or a semiconductor memory, for example.

The physical storage module 112 according to this exemplary embodiment is in particular configured by including a shared memory region that can be accessed from both of the physical control module 111 and the virtual control module 13. Details of the shared memory region will be described later.

The physical communication module 113 controls a process of communicating with each virtual machine, the NFV MANO 2, the OSS/BSS 4, the client 200, or the like by the physical control module 111. The physical communication module 113 controls a communication process with a network which is different from that for the communication system 100 according to this exemplary embodiment. The physical communication module 113 is implemented by using an NIC (Network Interface Card) or the like, for example.

The virtualisation layer 12 executes a process of abstracting hardware. Further, the virtualisation layer 12 relays a connection between the hardware and each of the virtual machine and the VNFs. In other words, the hardware accesses each of the virtual machine and the VNFs via the virtualisation layer 12, and executes a process set in the virtual machine and each of the VNFs.

The virtual control module 13 executes the VNF set in each virtual node 31. The virtual storage module 14 stores information necessary for executing the VNF. The virtual communication module 15 controls a communication process between the virtual machine and the NFV MANO 2. Further, the virtual communication module 15 controls a communication process between the virtual machine and the OSS/BSS 4.

### (OSS/BSS 4)

The OSS/BSS 4 provides a communication service. A telecommunications carrier, for example, manages the OSS/BSS 4.

Hereinafter, a further detailed description will be given about the NFVI 10.

Fig. 3 is a block diagram illustrating an example of modules related to this exemplary embodiment in the internal configuration of the NFVI 10 according to this exemplary embodiment. The NFVI 10 illustrated in Fig. 3 is configured by including a CPU 120, a main memory (corresponding to the physical storage module 112 illustrated in Fig. 2) 130, an FPGA 140, and a memory management module 150. In the following description, the circuit of the FPGA 140 is referred to as an offloading module (the physical control module 111 illustrated in Fig. 2) 141. Further, in the following description, a process (process) to be executed by the CPU 120 is referred to as a non-offloading module (corresponding to the virtual control module 13 illustrated in Fig. 2) 121. The main memory 130 is also referred to as a first storage module. The memory management module 150 is also referred to a storage region management part. Though Fig. 3 illustrates one FPGA 140 and one CPU 120, this illustration does not intend to limit the number of each of the FPGA 140 and the CPU 120 according to this exemplary embodiment to one. Similarly, Fig. 3 illustrates one offloading module 141 and one non-offloading module 121, but this illustration does not intend to limit the number of each of the offloading part 141 and the non-offloading module 121 according to this exemplary embodiment to one. The NFVI 10 may be configured by including two or more FPGAs 140, two or more CPUs 120, two or more offloading modules 141, and two or more non-offloading modules 121.

A register (also referred to as a second storage module) 142 of the FPGA 140 stores an address mapping table 143. The address mapping table 143 stores a correspondence relation between each virtual address and a physical address.

The main memory 130 includes the shared memory region that can be accessed from both of the offloading module 141 and the non-offloading module 121. The shared memory region is configured by including a first storage region and a second storage region.

The first storage region is configured by including a message buffer (message buffer; also referred to as an mbuf) 132. The message buffer 132 stores packet data.

The second storage region stores addresses (virtual addresses) for the message buffer 132. The second storage region may store each address (virtual address) for the message buffer 132, by using an array of a ring queue type, for example. In the following description, a case where each address for the message buffer 132 is stored in the second storage region by using the array of the ring queue type will be illustrated and described. Then, in the following description, the array of the ring queue type for storage in the second storage region will be written as a ring queue 131.

The second storage region stores the addresses (virtual addresses) for the message buffer 132, using the array of the ring queue type. As illustrated in Fig. 3, naturally, the second storage region may store a plurality of ring queues (133_1 to 133_n (n being a natural number of two or more)).

The address mapping table 143 stores the correspondence relation between each virtual address and the physical address.

The NFVI 10 performs packet communication between the offloading module 141 and the non-offloading module 121, using the ring queue 131 and the message buffer 132.

A transmission source (offloading module 141 or non-offloading module 121) of the packet data writes the packet data into the message buffer 132. Then, the transmission source (offloading module 141 or non-offloading module 121) of the packet data stores (enqueues (enqueues)), in the ring queue 131, the address (virtual address) for the message buffer 132 into which the packet data has been written.

Then, a transmission destination (offloading module 141 or non-offloading module 121) of the packet data extracts (dequeues (dequeues)) the address (virtual address) for the message buffer 132 from the ring queue 131. Then, the transmission destination of the packet data converts the virtual address for the message buffer 132 to the physical address in the message buffer 132, by referring to the address mapping table 143. Then, the transmission destination of the packet data accesses the packet data that is stored in the message buffer 132, based on the physical address obtained by the conversion.

It is assumed, for example, that packet data is transmitted from the offloading module 141 to the non-offloading module 121. In that case, the offloading module 141 (transmission source of the packet data) writes the packet data into the message buffer 132. Then, the offloading module 141 (transmission source of the packet data) stores, in the ring queue 131, the address for the message buffer 132 into which the packet data has been written.

Then, the non-offloading module 121 (transmission destination of the packet data) extracts, from the ring queue 131, the address (virtual address) for the message buffer 132 into which the packet data has been written. Then, the non-loading module 121 (transmission destination of the packet data) converts the virtual address to the physical address, by referring to the address mapping table 143. Then, the non-offloading module 121 (transmission destination of the packet data) reads the message buffer 132, based on the address for the message buffer 132 that has been extracted. Then, the non-offloading module 121 (transmission destination of the packet data) accesses the packet data that is stored in the message buffer 132, using the physical address obtained by the conversion.

The memory management module 150 operates on an OS (Operating System) of a host machine, thereby controlling the main memory 130. The memory management module 150 manages the ring queue 131 and the message buffer 132 in particular.

Subsequently, operations of the communication system 100 according to this exemplary embodiment will be described in detail.

Figs. 4, 5, and 6 are sequence diagrams each illustrating an example of operations of the communication system 100 according to this exemplary embodiment.

First, the operations of the communication system 100 according to this exemplary embodiment will be described with reference to Fig. 4.

First, the client 200 requests generation of a VNF to the NFV orchestrator 21 (step S001). Then, the NFV orchestrator 21 receives the request for the generation of the VNF (step S002). The client 200 is herein a terminal apparatus that is used by a man in charge of maintenance of the NFV MANO 2, a high-order apparatus of the NFV MANO 2, or the like, for example.

In step S003, the NFV orchestrator 21 checks whether or not the VNF can be configured. Then, if the VNF can be configured, the NFV orchestrator 21 requests the generation of the VNF to one of the one or more VNF managers 22 (step S004). Then, the VNF manager 22 receives the request for the generation of the VNF (step S005).

In step S006, the VNF manager 22 requests resource allocation to the NFV orchestrator 21.

In step S007, the NFV orchestrator 21 executes a preliminary process for the resource allocation. To take an example, the NFV orchestrator 21 executes a process of securing resources and reserving the allocation, or the like, as the preliminary process for the resource allocation.

In step S008, the NFV orchestrator 21 requests the allocation of the resources (for control, storage, and the network) and setting for inter-module connection(s) to the VIM 23.

In step S009, the VIM 23 executes allocation of the network for connecting the modules inside the system.

Subsequently, the operations of the communication system 100 according to this exemplary embodiment will be continuously described with reference to Fig. 5.

In step S010, the VIM 23 assigns the virtual machine and sets the virtual machine in the network for connecting the modules inside the system. Then, the VIM 23 sends an (ACK(acknowledgement)) response indicating completion of the resource allocation to the NFV orchestrator 21 (step S011). Then, the NFV orchestrator 21 sends an (ACK) response indicating the completion of the resource allocation to the VNF manager 22 (step S012).

The VNF manager 22 notifies success of the generation of the VNF to one of the virtual management nodes (EMSs) (step S013).

In step S014, the virtual management node (EMS) configures the VNF. Specifically, the virtual management node (EMS) sets a specific parameter in an application that comprises the virtual node (VNF).

Subsequently, the operations of the communication system 100 according to this embodiment will be continuously described with reference to Fig. 6.

In step S015, the VNF manager 22 notifies information of the names of the memory regions that store the ring queue 131 and the message buffer 132 to the VIM. That is, the VNF manager 22 notifies the information for identifying the second storage region and the first storage region to the VIM. To take an example, in the case of the Intel DPDK, each of the host machine and the guest machine that comprise the NFVI can access data stored in each of the memory regions corresponding to the name of the memory region by using the name of the memory region as a search key.

It is assumed that when the process in step S015 is executed, the memory management module 150 has secured the memory regions (second storage region and first storage region) that store the ring queue 131 and the message buffer 132. To take an example, before the VNF generation process is executed, the memory management module 150 may secure the shared memory region that is accessible between the host machine and each virtual machine and between the virtual machines, using a technology such as IVSHMEM (Inter VM (Virtual Machine) Shared Memory).

In step S016, the VIM 23 notifies, to the memory management module 150, the information of the names of the memory regions that store the ring queue 131 and the message buffer 132. That is, the VIM 23 notifies the information for identifying the second storage region and the first storage region to the memory management module 150.

In step S017, the memory management module 150 generates the address mapping table 143 between each virtual address and a physical address. Specifically, the memory management module 150 generates the address mapping table 143 for conversion from the virtual address to the physical address.

In step S018, the memory management module 150 sets the address mapping table 143 between the physical address and a virtual memory in the FPGA 140. Specifically, the memory management module 150 sets the address mapping table 143 for conversion from the virtual address to the physical address in the register 142 of the FPGA 140. Further, the memory management module 150 sets, in the register 142 of the FPGA 140, the virtual address in the ring queue 131.

In step S019, the VNF manager 22 sends an (ACK) response indicating completion of the generation of the VNF to the NFV orchestrater 21. Then, the NFV orchestrator 21 sends an (ACK) response indicating the completion of the generation of the VNF to the client 200.

As mentioned above, the NFVI 10 according to this exemplary embodiment includes the shared memory region that can be accessed from both of the host machine and each virtual machine. Then, the NFVI 10 according to this exemplary embodiment stores packet data in the shared memory region when communication is performed between the host machine and the virtual machine. Further, the NFVI 10 according to this exemplary embodiment performs address conversion between the address (virtual address) on the guest machine and the address (physical address) on the host machine, using the address mapping table 143. Therefore, the NFVI 10 according to this exemplary embodiment can access the packet data without executing a process of copying the packet data between the host machine and the guest machine. Accordingly, the NFVI 10 according to this exemplary embodiment contributes to an improvement in a speed of communication between the host machine and the guest machine.

### [Second Exemplary Embodiment]

Subsequently, a second exemplary embodiment will be described in detail using the drawings.

This exemplary embodiment is a configuration in which a memory management module generates an address mapping table for converting each virtual address to a physical address. In the description of this exemplary embodiment, a description of the portion that overlaps the above-mentioned exemplary embodiment will be omitted. Further, in the description of this exemplary embodiment, a same reference numeral is given to a same component as that in the above-mentioned exemplary embodiment, thereby omitting a description of the same component. In the description of this exemplary embodiment, a description of the same operation and effect as that in the above-mentioned exemplary embodiment will be omitted.

An internal configuration of a communication system 100 according to this exemplary embodiment is as illustrated in Fig. 2. Modules related to this exemplary embodiment in the internal configuration of an NFVI 10 according to this exemplary embodiment are as illustrated in Fig. 3.

Each of Figs. 7, 8, and 9 is a sequence diagram illustrating an example of operations of the communication system 100 according to this exemplary embodiment. Since processes in steps S101 to S109 illustrated in Fig. 7 are the same as the processes in steps S001 to S009 illustrated in Fig. 4, a detailed description of the processes in steps S101 to S109 will be omitted.

Hereinafter, the operations of the communication system 100 according to this exemplary embodiment will be described with reference to Fig. 8.

When a VIM 23 executes allocation of a network for connecting modules inside the system (step S109 illustrated in Fig. 7), the VIM 23 assigns a virtual machine and sets the virtual machine in the network for connecting the modules inside the system (step S110).

In step Sill, the VIM 23 requests a memory management module 150 to allocate memory regions for storing a ring queue 131 and a message buffer 132.

In step S112, the memory management module 150 generates or allocate the memory regions for storing the ring queue 131 and the message buffer 132 in a main memory 130.

In step S113, the memory management module 150 generates an address mapping table 143 between each virtual address and a physical address. Specifically, as in the process in step S017 illustrated in Fig. 6, the memory management module 150 generates the address mapping table 143 for conversion from the virtual address to the physical address.

In step S114, the memory management module 150 sets the address mapping table 143 between the physical address and the virtual address in an FPGA 140. Specifically, as in the process in step S018 illustrated in Fig. 6, the memory management module 150 sets the address mapping table 143 for conversion from the virtual address to the physical address in a register 142 of the FPGA 140. Further, the memory management module sets, in the register 142 of the FPGA 140, the virtual address in the ring queue 131.

Then, the VIM 23 makes an (ACK) response indicating completion of resource allocation to an NFV orchestrator 21 (step S115 illustrated in Fig. 10). Then, the communication system 100 according to this exemplary embodiment executes processes in steps S116 to S120 illustrated in Fig. 10. Since the processes in steps S116 to S120 illustrated in Fig. 10 are the same as the processes in steps S011 to S014 illustrated in Fig. 5 and the processes in steps S019 to S020 illustrated in Fig. 6, a detailed description of the processes in steps S116 to S120 will be omitted.

As mentioned above, in the NFVI 10 according to this exemplary embodiment, the memory management module 150 generates or allocates the address mapping table 143 for the address conversion and the message buffer 132. Then, when communication is performed between a host machine and the virtual machine, the NFVI 10 according to this exemplary embodiment stores packet data in a shared memory region. Further, the NFVI 10 according to this exemplary embodiment performs address conversion between the address (virtual address) on a guest machine and the address (physical address) on the host machine, using the address mapping table 143. Therefore, the NFVI 10 according to this exemplary embodiment can access the packet data without executing a process of copying the packet data between the host machine and the guest machine. Accordingly, the NFVI 10 according to this exemplary embodiment contributes to an improvement in a speed of communication between the host machine and the guest machine, as in the first exemplary embodiment.

A part or all of the above-mentioned exemplary embodiments can be described as indicated in the following modes, but are not limited to the followings.
(Mode 1) See the control apparatus according to the first aspect.
(Mode 2) The control apparatus according to the mode 1, further comprising a second storage module for storing an address mapping table configured to associate each of the virtual addresses and a physical address, wherein the physical control module manages the address mapping table.
(Mode 3) The control apparatus according to the mode 2, wherein the virtual control module stores the packet data in the first storage region and stores, in the second storage region, the virtual address configured to identify the first storage region where the packet data has been stored, and the physical control module reads the virtual address from the second storage region, converts the read virtual address to the physical address configured to identify the first storage region by referring to the address mapping table, and reads the packet data from the first storage region, based on the physical address obtained by the conversion.
(Mode 4) The control apparatus according to mode 2 or 3, wherein the physical control module stores the packet data in the first storage region and stores, in the second storage region, the virtual address configured to identify the first storage region where the packet data has been stored, and the virtual control module reads the virtual address from the second storage region, converts the read virtual address to the physical address configured to identify the first storage region by referring to the address mapping table, and reads the packet data from the first storage region, based on the physical address obtained by the conversion.
(Mode 5) The control apparatus according to the mode 4, further comprising a storage region management module configured to store the address mapping table in the second storage module, wherein the storage region management module generates the first storage region and the second storage region in the first storage module.
(Mode 6) See the control system according to the second aspect.
(Mode 7) The control system according to mode 6, wherein the management node generates the first storage region and the second storage region in the first storage module.
(Mode 8) The control system according mode 6 or 7, wherein the control apparatus further comprises a second storage module configured to store an address mapping table configured to associate each of the virtual addresses and a physical address, and a storage region management module configured to store the address mapping table in the second storage module, and the storage region management module generates the first storage region and the second storage region in the first storage module.
(Mode 9) See the control method according to the third aspect.
(Mode 10) See the program according to the fourth aspect.

Each disclosure of the above-listed Patent Literatures and Non Patent Literatures is incorporated herein by reference. Modification and adjustment of the exemplary embodiment are possible within the scope of the overall disclosure (including the claims) of the present invention and based on the technical concept of the present invention. Various combinations and selections of various disclosed elements (including each element in each claim, each element in each exemplary embodiment, each element in each drawing, and the like) are possible within the scope of the overall disclosure of the present invention. That is, the present invention naturally includes various variations and modifications that could be made by those skilled in the art according to the overall disclosure including the claims and the technical concept. With respect to a numerical value range described herein in particular, an arbitrary numerical value and a small range included in the numerical value range should be construed to be specifically described even unless otherwise explicitly described.

### REFERENCE SIGNS LIST

- 2: NFV MANO
- 3: VNF layer
- 4: OSS/BSS
- 10: NFVI
- 11: hardware resources
- 12: virtualisation layer
- 13, 1001: virtual control module
- 14: virtual storage module
- 15: virtual communication module
- 21: NFV orchestrator
- 22: VNF manager
- 23: VIM
- 31, 31-a∼31-c: virtual nodes (VNFs)
- 32, 32-a∼32-c: virtual management nodes (EMSs)
- 100: communication system
- 111, 1002: physical control module
- 112: physical storage module
- 113: physical communication module
- 120: CPU
- 121: non-offloading module
- 130: main memory
- 131, 133_1∼133_n: ring queues
- 132: message buffer
- 140: FPGA
- 141: off-loading module
- 142: register
- 143: address mapping table
- 150: memory management module
- 200: client
- 1000: control apparatus
- 1003: first storage module
- 1004: first storage region
- 1005: second storage region

## Claims

1. A control apparatus configured by including one or more virtual machines each configured to control a virtual network function and a host machine configured to control the one or more virtual machines, the control apparatus comprising:
a virtual control module configured to control the one or more virtual machines;
a physical control module configured to control the host machine; and
a first storage module configured to be accessible by the virtual control module and the physical control module, wherein
the first storage module includes a first storage region and a second storage region,
packet data is stored in the first storage region,
virtual addresses each configured to identify the first storage region are stored in the second storage region, and
the control apparatus identifies the first storage region based on one of the virtual addresses that are stored in the second storage region and reads the packet data from the identified first storage region.

2. The control apparatus according to claim 1, further comprising:
a second storage module for storing an address mapping table configured to associate each of the virtual addresses and a physical address, wherein
the physical control module manages the address mapping table.

3. The control apparatus according to claim 2, wherein
the virtual control module stores the packet data in the first storage region and stores, in the second storage region, the virtual address configured to identify the first storage region where the packet data has been stored, and
the physical control module reads the virtual address from the second storage region, converts the read virtual address to the physical address configured to identify the first storage region by referring to the address mapping table, and reads the packet data from the first storage region, based on the physical address obtained by the conversion.

4. The control apparatus according to claim 2 or 3, wherein
the physical control module stores the packet data in the first storage region and stores, in the second storage region, the virtual address configured to identify the first storage region where the packet data has been stored, and
the virtual control module reads the virtual address from the second storage region, converts the read virtual address to the physical address configured to identify the first storage region by referring to the address mapping table, and reads the packet data from the first storage region, based on the physical address obtained by the conversion.

5. The control apparatus according to claim 4, further comprising:
a storage region management module configured to store the address mapping table in the second storage module, wherein
the storage region management module generates the first storage region and the second storage region in the first storage module.

6. A control system configured by including a control apparatus configured by including one or more virtual machines each configured to control a virtual network function and a host machine configured to control the one or more virtual machines, and a management node configured to assign one of the one or more virtual machines, wherein
the control apparatus is configured by including the one or more virtual machines each configured to control the virtual network function and the host machine configured to control the one or more virtual machines,
the control apparatus includes:
a virtual control module to control the one or more virtual machines;
a physical control module configured to control the host machine; and
a first storage module configured to be accessible by the virtual control module and the physical control module,
the first storage module includes a first storage region and a second storage region,
packet data is stored in the first storage region;
virtual addresses each configured to identify the first storage region are stored in the second storage region, and
the control apparatus identifies the first storage region based on one of the virtual addresses that are stored in the second storage region and reads the packet data from the identified first storage region.

7. The control system according to claim 6, wherein
the management node generates the first storage region and the second storage region in the first storage module.

8. The control system according to claim 6 or 7, wherein
the control apparatus further comprises:
a second storage module configured to store an address mapping table configured to associate each of the virtual addresses and a physical address; and
a storage region management module configured to store the address mapping table in the second storage module, and
the storage region management module generates the first storage region and the second storage region in the first storage module.

9. A control method of a control apparatus configured by including one or more virtual machines each configured to control a virtual network function and a host machine configured to control the one or more virtual machines, the control apparatus including:
a virtual control module configured to control the one or more virtual machines;
a physical control module configured to control the host machine; and
a first storage module configured to be accessible by the virtual control module and the physical control module, the first storage module being configured by including a first storage region and a second storage region, the control method comprising the steps of:
storing packet data in the first storage region;
storing, in the second storage region, virtual addresses each configured to identify the first storage region;
identifying the first storage region based on one of the virtual addresses that are stored in the second storage region; and
reading the packet data from the identified first storage region.

10. A program configured to be executed by a computer configured to control a control apparatus, the control apparatus being configured by including one or more virtual machines each configured to control a virtual network function and a host machine configured to control the one or more virtual machines, the control apparatus including:
a virtual control module configured to control the one or more virtual machines;
a physical control module configured to control the host machine; and
a first storage module configured to be accessible by the virtual control module and the physical control module, the first storage module being configured by including a first storage region and a second storage region, the program causing the computer to execute the processes of:
storing packet data in the first storage region;
storing, in the second storage region, virtual addresses each configured to identify the first storage region;
identifying the first storage region based on one of the virtual addresses that are stored in the second storage region; and
reading the packet data from the identified first storage region.
